(19) Europäisches Patentamt
European Patent Office
Office européen des brevets

(11) **EP 4 780 099 A1**

(12) **EUROPEAN PATENT APPLICATION**
published in accordance with Art. 153(4) EPC

(43) Date of publication:
**22.07.2026 Bulletin 2026/30**

(21) Application number: 23951928.3

(22) Date of filing: **15.09.2023**

(51) International Patent Classification (IPC):
**H04W 72/04** (2023.01)  **H04W 72/0453** (2023.01)
**H04W 72/12** (2023.01)

(52) Cooperative Patent Classification (CPC):
**H04W 72/04; H04W 72/0453; H04W 72/12**

(86) International application number:
**PCT/CN2023/119259**

(87) International publication number:
**WO 2025/055000 (20.03.2025 Gazette 2025/12)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventor: **XU, Jing
Dongguan, Guangdong 523860 (CN)**

(74) Representative: **Penza, Giancarlo
Bugnion S.p.A.
Viale Lancetti, 17
20158 Milano (IT)**

(54) **RESOURCE DETERMINATION METHOD AND APPARATUS, DEVICE, AND STORAGE MEDIUM**

(57)    A resource determination method and apparatus, a device, and a storage medium, relating to the technical field of communications. The method comprises: on the basis of at least two frequency domain resources, determining the number of frequency domain units comprised in a frequency domain unit group, wherein each frequency domain resource includes at least one frequency domain unit. By determining, on the basis of at least two frequency domain resources, the number of frequency domain units comprised in a frequency domain unit group, the size of the frequency domain unit group is determined on the basis of a combination of a plurality of frequency domain resources, and the size of the frequency domain unit group does not need to be independently determined for each frequency domain resource, thereby reducing the complexity of resource determination.

The number of frequency domain units included in the frequency domain unit group is determined based on at least two frequency domain resources, each frequency domain resource includes at least one frequency domain unit

310

**FIG. 3**

**Description**

TECHNICAL FIELD

Embodiments of the present disclosure relate to the technical field of communication, and particularly to a resource determination method and apparatus, a device and a storage medium.

BACKGROUND

By configuring carrier aggregation (CA) in New Radio (NR) system, higher data rate and network capacity can be obtained.

In the related art, for an NR system in which CA is configured, a Resource Block Group (RBG) size or a subband size of each of multiple carriers is independently determined based on each carrier.

Since the above resource determination method needs to independently determine the RBG size or the subband size for each carrier, the complexity is high.

SUMMARY

Embodiments of the present disclosure provide a resource determination method and apparatus, a device, and a storage medium. The technical solutions provided by the embodiments of the present disclosure are as follows.

According to an aspect of an embodiment of the present disclosure, there is provided a resource determination method, the method includes the following operation.

A number of frequency domain units included in a frequency domain unit group based on at least two frequency domain resources. Each of the frequency domain resources includes at least one of the frequency domain units.

According to an aspect of an embodiment of the present disclosure, there is provided a resource determination apparatus, the apparatus includes a processing module.

The processing module is configured to determine a number of frequency domain units included in a frequency domain unit group based on at least two frequency domain resources. Each of the frequency domain resources includes at least one of the frequency domain units.

According to an aspect of an embodiment of the present disclosure, there is provided a communication device including a processor and a memory storing a computer program in the memory, and the processor executes the computer program to perform the resource determination method.

According to an aspect of an embodiment of the present disclosure, there is provided a computer-readable storage medium in which a computer program is stored, and the computer program is executed by a processor to perform the resource determination method.

According to an aspect of an embodiment of the present disclosure, there is provided a chip including a programmable logic circuit and/or program instructions, the chip performs the above-described resource determination method when is running.

According to an aspect of an embodiment of the present disclosure, there is provided a computer program product including a computer program stored in a computer readable storage medium, from which a processor reads and executes the computer program to perform the resource determination method described above.

The technical solution provided by the embodiment of the present disclosure can bring the following beneficial effects.

By determining the number of frequency domain units included in the frequency domain unit group based on the at least two frequency domain resources, the size of the frequency domain unit group is jointly determined based on the multiple frequency domain resources, and it is not necessary to independently determine the size of the frequency domain unit group for each frequency domain resource, thereby reducing the complexity of resource determination.

BRIEF DESCRIPTION OF THE DRAWINGS

FIG. 1 is a schematic diagram of a network architecture according to an embodiment of the present disclosure.
FIG. 2 is a schematic diagram of an example of terminal carrier aggregation according to an embodiment of the present disclosure.
FIG. 3 is a flowchart of a resource determination method according to an embodiment of the present disclosure.
FIG. 4 is a schematic diagram of RBGs obtained by performing division according to an embodiment of the present disclosure.

FIG. 5 is a schematic diagram of RBGs obtained by performing division according to another embodiment of the present disclosure.

FIG. 6 is a schematic diagram of RBGs obtained by performing division in a case where multiple devices share the same carrier according to an embodiment of the present disclosure.

FIG. 7 is a schematic diagram of RBGs obtained performing division in a case where multiple devices share the same carrier according to another embodiment of the present disclosure.

FIG. 8 is a block diagram of a resource determination apparatus according to an embodiment of the present disclosure.

FIG. 9 is a schematic structural diagram of a communication device according to an embodiment of the present disclosure.

DETAILED DESCRIPTION

In order to clarify the object, technical solution, and advantages of the present disclosure, embodiments of the present disclosure will be described in further detail below with reference to the accompanying drawings.

The network architecture and the service scenarios described in the embodiments of the present disclosure are for more clearly describing the technical solutions of the embodiments of the present disclosure, and do not constitute a limitation on the technical solutions provided by the embodiments of the present disclosure. Those skilled in the art will know that with the evolution of the network architecture and the emergence of new service scenarios, the technical solutions provided by the embodiments of the present disclosure are equally applicable to similar technical problems.

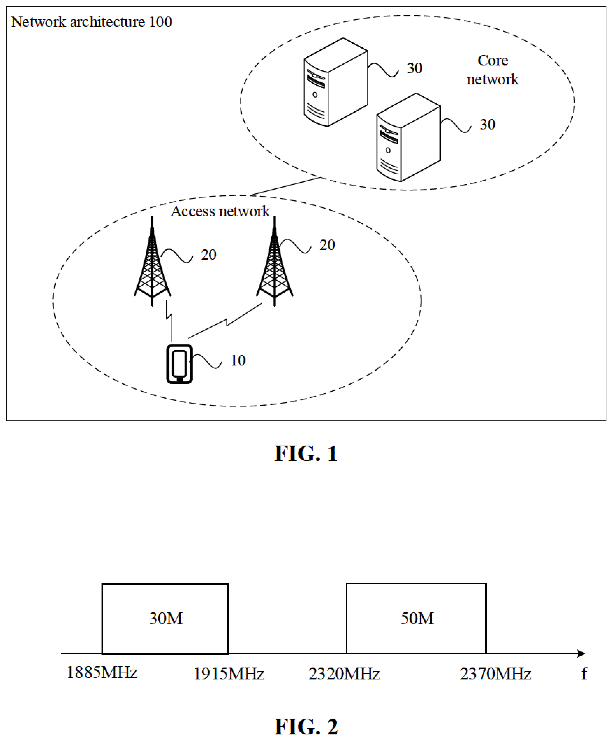

With reference to FIG. 1, which shows a schematic diagram of a network architecture 100 provided by an embodiment of the present disclosure. The network architecture 100 may include a terminal device 10, an access network device 20, and a core network element 30.

The terminal device 10 may refer to a UE (User Equipment), an access terminal, a subscriber unit, a subscriber station, a mobile station, a mobile site, a remote station, a remote terminal, a mobile device, a wireless communication device, a user agent, or a user device. In some embodiments, the terminal device 10 may also be a cellular telephone, a cordless telephone, a SIP (Session Initiation Protocol) telephone, a WLL (Wireless Local Loop) station, a PDA (Personal Digital Assistant), a handheld device having a wireless communication function, a computing device or other processing device connected to a wireless modem, a vehicle-mounted device, a wearable device, a terminal device in a 5th Generation System (5GS), or a terminal device in a future evolution PLMN (Public Land Mobile Communication Network). For convenience of description, the above-mentioned devices are collectively referred to as terminal devices. Multiple terminal devices 10 exist typically, and one or more terminal devices 10 may be distributed in a cell managed by each access network device 20. The terminal device may also be referred to as a terminal or a UE for short, and the meaning thereof can be understood by those skilled in the art.

The access network device 20 is a device deployed in an access network for providing wireless communication functionality for the terminal device 10. The access network device 20 may include various forms of macro base stations, micro base stations, relay stations, access points, and the like. In systems employing different radio access technologies, the names of devices having access network device functions may be different, for example, in 5G NR systems, they are called gNodeB or gNB. As communications technology evolves, the name "access network equipment" may change. For convenience of description, in the embodiment of the present disclosure, the above-described devices that provide wireless communication functions for the terminal device 10 are collectively referred to as access network devices. In some embodiments, a communication relationship may be established between the terminal device 10 and the core network element 30 through the access network device 20. Exemplarily, in a Long Term Evolution (LTE) system, the access network device 20 may be a Evolved Universal Terrestrial Radio Access Network (EUTRAN) or one or more eNodeBs in the EUTRAN. In the 5G NR system, the access network device 20 may be a RAN (Radio Access Network) or one or more gNBs in the RAN. In the embodiment of the present disclosure, unless otherwise specified, the "network device" refers to an access network device 20, such as a base station.

The core network element 30 is a network element deployed in the core network, and the functions of the core network element 30 are mainly to provide user connection and management of users, complete bearer of services, and provide an interface to an external network as a bearer network. For example, core network elements in the 5G NR system may include network elements such as an Access and Mobility Management Function (AMF) entity, a User Plane Function (UPF) entity, and a Session Management Function (SMF) entity.

In some embodiments, the access network device 20 and the core network element 30 communicate with each other through a certain air interface technology, such as an NG interface in a 5G NR system. The access network device 20 and the terminal device 10 communicate with each other through a certain air interface technology, such as a Uu interface.

The "5G NR system" in the embodiment of the present disclosure may also be referred to as a 5G system or an NR system, but those skilled in the art may understand the meaning thereof. The technical solutions described in the embodiments of the present disclosure may be applied to an LTE system, a 5G NR system, a subsequent evolution system of the 5G NR system (such as a Beyond 5G (B5G) system, and a 6th Generation System (6G) system), and other communication systems such as an Narrow Band Internet of Things (NB-IoT) system, which is not limited in the present disclosure.

In the embodiment of the present disclosure, the network device may provide a service for the cell, and the terminal device communicates with the network device through a transmission resource (for example, frequency domain resource or spectrum resource) on a carrier used by the cell. The cell may be a cell corresponding to the network device (for example, a base station), and the cell may belong to a macro base station or a base station corresponding to a Small cell. The Small cell here may include: a Metro cell, a Micro cell, a Pico cell, a Femto cells, etc. These Small cells are characterized by small coverage area and low transmission power, and are suitable for providing high-rate data transmission services.

Before introducing the technical solution of the present disclosure, some related technical knowledge involved in the present disclosure will be introduced and described. The following related technologies may be arbitrarily combined with the technical solutions of the embodiments of the present disclosure as optional solutions, and all of them belong to the scope of protection of the embodiments of the present disclosure. Embodiments of the present disclosure include at least some of the following.

1. CA

CA refers to a technology that provides services to a UE by simultaneously using frequency domain resources on multiple carriers in an NR system to obtain higher data rate and network capacity. That is, multiple serving cells (cells) are configured for the UE, and the UE can transmit and receive data in multiple cells at the same time.

At present, operators have multiple non-contiguous narrow bandwidth frequency band resources. For example, the operator A is allocated 30M bandwidth in the 1.9 GHz band, 15M bandwidth in the 2.0 GHz band, 50M bandwidth in the 2.3 GHz band, and the like. The operator B is allocated 20M bandwidth in the 1.7 GHz frequency band, 20M bandwidth in the 1.8 GHz frequency band, 20M bandwidth in the 2.3 GHz frequency band, 20M bandwidth in the 2.5 GHz frequency band, and the like. Operator C is allocated 15M bandwidth in the 1.7 GHZ frequency band, 15M bandwidth in the 1.8 GHz frequency band, 20M bandwidth in the 2.3 GHz frequency band, 20M bandwidth in the 2.6 GHz frequency band, etc.

As illustrated in FIG. 2, the UE is configured with two serving cells with bandwidths of 30M and 50M respectively. At this time, the maximum transmission bandwidth of the UE is equivalent to 80M.

2. RBG

RBG is the basic scheduling unit for data channel frequency domain resource allocation and is used for type0 frequency domain resource allocation. In the 5G NR system, type0 is a frequency domain resource allocation mode. The 5G NR system provides a type0 frequency domain resource allocation method and a type1 frequency domain resource allocation method. Among them, the Type0 frequency domain resource allocation method has the concept of RBG. In short, several RBs (Resource Block) are combined together to be called an RBG. Each RBG corresponds to a 1-bit, and if the bit is set to 1, it means that the RBG has been allocated to the UE. Therefore, the type0 frequency domain resource allocation method supports contiguous and non-contiguous frequency domain resource allocation. In addition, the type1 frequency domain resource allocation method is irrelevant to the technical solution of the present disclosure, and will not be described here.

For one carrier, one carrier may include at least one RB, and typically one carrier includes multiple RBs. One or more Bandwidth Parts (BWPs) may be configured on one carrier, and further, at least one BWP may be activated for use from the configured one or more BWPs. A BWP may include all or part of the RBs on the carrier. Exemplarily, one carrier includes 100 RBs numbered sequentially from 0 to 99, and the activated BWP on the carrier includes 10 RBs numbered from 10 to 19. In addition, the basic scheduling unit of frequency domain resources on the carrier or its activated BWP is RBG, and one RBG may include at least one RB. Typically, one RBG includes multiple RBs, such as 2, 4, 8, or 16 RBs. Therefore, RBs on a carrier or its activated BWP can be grouped, and all RBs on the carrier or its activated BWP can be divided into several RBGs, and resource scheduling may be performed in units of RBGs.

An RBG size indicates the number of RBs included in the RBG. The RBG size is determined jointly based on the BWP size and higher layer signaling configuration. Here, the BWP size refers to the number of RBs included in the BWP. The high-layer signaling configuration refers to Radio Resource Control (RRC) signaling configuration. RRC signaling is the highest-layer Radio Resource Control signaling in the 5G NR system, and is responsible for carrying system information and completing the configuration of radio resource management. The BWP consists of some or all RBs within one carrier. Here, RB may be either contiguous or non-contiguous, which is not limited by the present disclosure. One carrier may contain multiple BWPs. The basic principle of determining RBG is to combine N RBs with consecutive indexes into an RBG, and N is an integer greater than 1. Referring specifically to Table 1, for example, when the number of RBs included in the BWP is 1 to 36, the number of RBs included in the RBG is 2 based on Configuration 1, and the number of RBs included in the RBG is 4 based on Configuration 2, that is, the numbers in the table represent different BWP sizes and RBG sizes corresponding to different configurations.

Table 1

| Number of RBs included in BWP | Configuration 1 | Configuration 2 |
|---|---|---|
| 1- 36 | 2 | 4 |
| 37 - 72 | 4 | 8 |
| 73 - 144 | 8 | 16 |
| 145 - 275 | 16 | 16 |

The number $N_{RBG}$ of RBGs contained in one BWP is calculated as:

$$N_{RBG} = \left\lceil \left( N_{BWP,i}^{size} + \left( N_{BWP,i}^{start} \bmod P \right) \right) / P \right\rceil$$

Here, mod is a modulo operator, $N_{BWP,i}^{size}$ is the number of RBs included in the i-th BWP in the carrier, $N_{BWP,i}^{start}$ is the serial number of the first RB in the i-th BWP in the carrier, and P is the number of RBs included in the RBG, which corresponds to the number in Table 1.

In the case where the number of RBs included in the BWP cannot be divisible by P (RBG size), the division of the sizes of the first and last RBGs in the BWP is optimized, with details referring to the following formulas.

The size of the first RBG is: $RBG_0^{size} = P - N_{BWP,i}^{start} \bmod P$ .

The size of the last RBG is:

if

$$\left( N_{BWP,i}^{start} + N_{BWP,i}^{size} \right) \bmod P \neq 0, \; RBG_{last}^{size} = \left( N_{BWP,i}^{start} + N_{BWP,i}^{size} \right) \bmod P,$$

if

$$\left( N_{BWP,i}^{start} + N_{BWP,i}^{size} \right) \bmod P = 0, \; RBG_{last}^{size} = P.$$

The size of each of the other RBGs is *P.*

3. Subbands

The basic unit (or granularity) for CSI (Channel State Information) reporting on the carrier or its activation BWP is a sub-band, and one sub-band may include at least one RB. In general, one sub-band includes multiple RBs, such as 4, 8, 16 or 32 RBs. Therefore, RBs on a carrier or its activated BWP may be grouped, and all RBs on a carrier or its activated BWP may be divided into several sub-bands, and CSI reporting may be performed in units of sub-bands.

The subband size indicates the number of RBs included in the subband. The sub-band size is determined jointly based on the BWP size and the higher layer signaling configuration. This higher layer signaling configuration also refers to an RRC signaling configuration. The specific value of the sub-band size is illustrated in Table 2. For example, when the number of RBs included in the BWP is 24 to 72, the sub-band size is 4 or 8. Different configurations correspond to different sub-band sizes, for example, when the higher layer signaling configuration is configuration 1, the sub-band size is 4; and when the higher layer signaling is configured to configuration 2, the sub-band size is 8. That is, the numbers in the table represent sub-band sizes corresponding to different BWP sizes and different configurations.

Table 2

| Number of RBs included in BWP | Subband size |
|---|---|
| 24 - 72 | 4, 8 |
| 73 - 144 | 8, 16 |

(continued)

| Number of RBs included in BWP | Subband size |
|---|---|
| 145 - 275 | 16, 32 |

The subbands are divided as follows:

The size of the first sub-band is: $N_{PRB}^{SB} - \left(N_{BWP,i}^{start} \bmod N_{PRB}^{SB}\right)$ .

Here, $N_{BWP,i}^{start}$ is the serial number of the first RB in the i-th BWP on the carrier, and $N_{PRB}^{SB}$ is the number of RBs included in the subband.

The size of the last Subband $Subband_{last}^{size}$ is:

if

$$\left(N_{BWP,i}^{start} + N_{BWP,i}^{size}\right) \bmod N_{RB}^{SB} \neq 0, Subband_{last}^{size} = \left(N_{BWP,i}^{start} + N_{BWP,i}^{size}\right) \bmod N_{RB}^{SB},$$

if

$$\left(N_{BWP,i}^{start} + N_{BWP,i}^{size}\right) \bmod N_{RB}^{SB} = 0, \ Subband_{last}^{size} = N_{RB}^{SB}.$$

The size of each of the other subbands is $N_{RB}^{SB}$ .

As can be seen from the above introduction, for the carrier aggregation scenario, the current RBG size determination method is independently determined based on each carrier, and the frequency domain resource indication method is to separately send scheduling information for each carrier. Then, when multiple carriers are aggregated together, for example, when frequency domain resources on multiple carriers (such as carrier 1 and carrier 2) are allocated to one terminal device, the terminal device and the access network device still adopt the current RBG size determination method, that is, the access network device of carrier 1 needs to separately send scheduling information for resource scheduling, and the access network device of carrier 2 needs to separately send scheduling information for resource scheduling. Therefore, this not only leads to a high complexity in determining the RBG size, but also leads to an increase in the amount of scheduling information of frequency domain resources.

Similarly, in the scenario of carrier aggregation, the current subband size determination method is also independently determined based on each carrier, that is, different carriers may be configured with different subband sizes. In this way, when the terminal device performs CSI measurement and reporting, the terminal device needs to measure and report the CSI at the corresponding sub-band size for each carrier, and the access network device also needs to parse the CSI at the corresponding sub-band size for each carrier. Therefore, this not only leads to higher complexity in determining the sub-band size, but also leads to increased complexity in CSI measurement, reporting, and parsing.

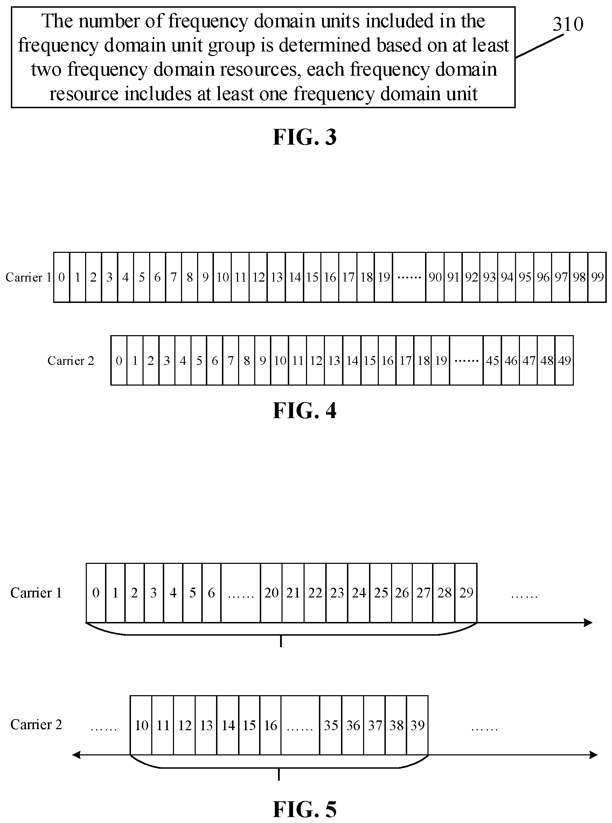

With reference to FIG. 3, it illustrates a flowchart of a resource determination method according to an embodiment of the present disclosure. The execution entity of various operations of the method may be the terminal device 10 or the access network device 20 in the network architecture illustrated in FIG. 1. The method may include operation 310 as follows.

At 310: a number of frequency domain units included in a frequency domain unit group is determined based on at least two frequency domain resources, each of the at least two frequency domain resources includes at least one frequency domain unit.

In some embodiments, the frequency domain resource refers to a frequency band or spectrum resource used for transmitting information in a communication system, and may be composed of one or more carriers. The frequency domain resource may be divided into multiple small units (i.e., a frequency domain unit group) in a block/group or the like. Frequency domain unit group is a resource management mechanism that combines one or more frequency domain units to form a logical resource management and scheduling unit. Among them, the frequency domain unit is the basic component element of the frequency domain unit group, and the frequency domain unit may be the smallest unit such as subcarriers and resource blocks.

In some embodiments, the frequency domain resource is a carrier, or an activated bandwidth on a carrier, or a set of frequency domain units with a same transmission direction on a carrier, or a set of frequency domain units with a same transmission direction within an activated bandwidth on a carrier.

In some embodiments, a carrier refers to a high-frequency electromagnetic wave signal used for wireless communication. In some embodiments, the activated bandwidth on a carrier refers to a bandwidth part that is actually activated and used within the total bandwidth of one carrier. For example, if the total bandwidth of a carrier is 100 MHz, but only 80 MHz of the bandwidth is activated and used on demand, then the activated bandwidth on the carrier is 80 MHz bandwidth. In the 5G NR system, the activated bandwidth on the carrier may be referred to as an activated BWP on the carrier, that is, some or all of the frequency domain resources on the carrier may be used by configuring and activating the BWP. However, the concept of activated bandwidth is not limited to activated BWP. In future systems such as B5G and 6G, any bandwidth may still be activated for use within a carrier as needed.

In some embodiments, one carrier may be used for both uplink and downlink transmission directions, uplink refers to a signal direction transmitted from the terminal device to the access network device, and downlink refers to a signal direction transmitted from the access network device to the terminal device. In order to better manage and schedule frequency domain resources, the total frequency domain resources of a carrier may firstly be divided into uplink part and downlink part based on the transmission directions. Then, within the frequency domain resource range corresponding to each transmission direction, it is continuously divided into multiple frequency domain units. The set of frequency domain units with the same transmission direction on a carrier refers to the set of frequency domain units having the same transmission direction in one carrier. For example, for a carrier with a bandwidth of 100 MHz, a bandwidth of 40 MHz can be allocated for the uplink first, then the bandwidth of 40 MHz may be divided into 10 uplink frequency domain units of 4 MHz, a bandwidth of 60 MHz may be allocated for the downlink, and the bandwidth of 60 MHz may be divided into 15 downlink frequency domain units of 4 MHz. In this way, not only can resources in different directions be flexibly scheduled, but also interference between different directions can be avoided.

In some embodiments, in an activated bandwidth on a carrier, the set of frequency domain units with the same transmission direction refers to a set of frequency domain units having the same transmission direction after frequency domain resources are divided into a uplink part and a downlink part based on the transmission direction, within the activated bandwidth range of one carrier.

The above frequency domain resource form reflects the continuous refinement of frequency domain resource management by wireless communication, considering both the whole and subdivision, with the purpose of improving frequency domain utilization efficiency and realizing flexible resource scheduling.

In some embodiments, at least two frequency domain resources are non-contiguous; alternatively, at least two frequency domain resources are contiguous. Frequency domain resources may have two forms: non-contiguous and contiguous. When describing the continuity of frequency domain resources, it is judged here based on the definition on the carrier, rather than the physical spectrum. For example, at least two frequency domain resources are physically contiguous, but they are defined as different frequency bands during spectrum division. In such case, we regard the at least two frequency domain resources as non-contiguous. That is, non-contiguous frequency domain resources refer to non-adjacent resources distributed across different frequency bands, such as 700MHz and 3.5 GHz, etc. Their sources can be different frequency bands, or they can also be intermittent resources within the same frequency band. Such non-contiguous resources need to be used collaboratively through technologies such as carrier aggregation, and need to be managed coordinately across frequency bands, because the propagation characteristics of each frequency band may vary. In contrast, contiguous frequency domain resources refer to resources located in adjacent frequency domains, such as an entire 100MHz bandwidth, which are more convenient to use and manage, can provide larger bandwidth, and have more consistent channel propagation characteristics.

In the above method, the utilization rate of non-contiguous frequency domain resources can be improved by aggregation, and the contiguous frequency domain resources are easier to manage and have a larger bandwidth. NR system can flexibly use two forms of frequency domain resources to give full play to their respective advantages to improve the overall wireless communication performance.

In some embodiments, each frequency domain resource includes at least one frequency domain unit, and the frequency domain unit may be an RB, where the RB may be understood as a Physical Resource Block (PRB). Generally, each frequency domain resource includes multiple frequency domain units. For example, one frequency domain resource may include 10, 30, 50, or 100 RBs. In the embodiment of the present disclosure, the number of RBs included in one frequency domain resource is not limited. By dividing the frequency domain resource or grouping the frequency domain units included in the frequency domain resource, at least one frequency domain unit group may be obtained. Each of the frequency domain unit groups may include at least one frequency domain unit. In general, each of the frequency domain unit groups includes multiple frequency domain units, or each of the frequency domain unit groups includes at least two frequency domain units. However, the present disclosure does not exclude some cases in which each frequency domain unit group includes only one frequency domain unit.

In some embodiments, the frequency domain unit group is an RBG and the frequency domain unit is an RB. One RBG includes one or more RBs.

In some embodiments, the frequency domain unit group is a subband, and the frequency domain unit is an RB. One sub-band includes one or more RBs.

In some embodiments, the number of frequency domain units included in a frequency domain unit group may be understood as the size of the frequency domain unit group. For example, when the number of frequency domain units included in the frequency domain unit group is x, it may be understood that the size of the frequency domain unit group is x, and x is a positive integer. Of course, in some possible cases, the size of the frequency domain unit group may also be referred to as other names such as the dimension or length of the frequency domain unit group, and the present disclosure does not impose restriction on this.

In some embodiments, the frequency domain unit group is an RBG, the frequency domain unit is an RB, and the number of RBs included in the RBG may be understood as the size of the RBG, that is, the RBG size.

In some embodiments, the frequency domain unit group is a sub-band, the frequency domain unit is an RB, and the number of RBs included in the sub-band may be understood as the size of the sub-band, that is, the subband size.

In some embodiments, the number of frequency domain units included in the frequency domain unit group is determined from a sum of the numbers of frequency domain units included in the at least two frequency domain resources. For example, it is assumed that two frequency domain resources 1 and 2 exist, and when the frequency domain resource 1 includes m frequency domain units and the frequency domain resource 2 includes n frequency domain units, then the sum of the numbers of frequency domain units in the two frequency domain resources is $m + n$, where m and n are integers greater than 0. Then, the number of frequency domain units included in the frequency domain unit group is determined based on the sum of the numbers of frequency domain units.

In some embodiments, the number of frequency domain units included in the frequency domain unit group is determined based on the configuration parameter and the sum of the numbers of frequency domain units included in the at least two frequency domain resources.

In some embodiments, the configuration parameter refers to the above-described higher-layer signaling configuration, such as RRC signaling configuration, and we consider the sum of the numbers of frequency domain units included in at least two frequency domain resources as a whole, and then determine the number of frequency domain units included in the frequency domain unit group based on the configuration parameter. The size of at least one frequency domain unit group may be determined based on the sum of the numbers of frequency domain units, for example, the sizes of at least two frequency domain unit groups may be determined based on the sum of the numbers of frequency domain units, and the sizes of the at least two frequency domain unit groups correspond to different configuration parameters, so the size of one frequency domain unit group can be further determined from the sizes of the at least two frequency domain unit groups based on the configuration parameters, and the determined size of the one frequency domain unit group is the number of frequency domain units included in the frequency domain unit group.

In some embodiments, at least one set of correspondences is specified in advance, and each set of correspondences includes correspondence between a quantity value range and a size of at least one frequency domain unit group. Based on the sum of the numbers of frequency domain units included in the at least two frequency domain resources, a quantity value range to which the sum of the numbers belongs (denoted as a first number value range) is determined, and then the size of at least one frequency domain unit group corresponding to the first number value range is found from the at least one set of correspondences. Further, in combination with the configuration parameter, the size of one frequency domain unit group corresponding to the configuration parameter is determined from the size of at least one frequency domain unit group corresponding to the first number value range as the finally determined size of the frequency domain unit group (that is, the number of frequency domain units included in the frequency domain unit group). The above-described at least one set of correspondences may be specified by a protocol or pre-configured, and the present disclosure is not limited thereto. In addition, in a case where the scheme of determining the number of frequency domain units included in the frequency domain unit group based on the sum of the numbers of frequency domain units included in at least two frequency domain resources provided in the present disclosure is adopted, in a case where the frequency domain unit group is an RBG, the correspondence illustrated in Table 1 above may still be applies to the at least one set of correspondences, or a new correspondence may be redefined. Similarly, in a case where the frequency domain unit group is a sub-band, the correspondence illustrated in Table 2 above may still be applies to the at least one set of correspondences, or a new correspondence may be redefined, and this is not limited in the present disclosure.

In some embodiments, at least two frequency domain resources belong to the same resource pool, and the configuration parameters are configured for the resource pool. Alternatively, the configuration parameter is shared by at least two frequency domain resources. Alternatively, the configuration parameters corresponding to each frequency domain resource of the at least two frequency domain resources are the same.

A resource pool refers to a set of frequency domain resources. If the frequency domain resource belongs to the same resource pool, the configuration parameters may be uniformly configured for the resource pool. For example, if the frequency domain resource 1 and the frequency domain resource 2 belong to the same resource pool 1, they use the configuration parameters of the resource pool 1. The configuration parameter is shared by at least two frequency domain resources, that is, the frequency domain resource 1 and the frequency domain resource 2 share the same configuration parameter, but the two frequency domain resources may not be in the same resource pool, or may be in the same resource pool. Each frequency domain resource in the at least two frequency domain resources corresponds to the same configuration parameter, that is, the configuration parameters are separately configured for each frequency domain resource, but the same parameter configuration is configured for the frequency domain resource 1 and the frequency domain resource 2.

In the above method, by configuring at least two frequency domain resources into the same resource pool, or sharing the same configuration parameter for the at least two frequency domain resources, or separately configuring the same configuration parameter for the at least two frequency domain resources, the at least two frequency domain resources may have association, and the consistency of the association and configuration can facilitate the pool management of frequency domain resources, simplify the signaling overhead of resource configuration, and make the management and scheduling of frequency domain resources simpler and more efficient.

In some embodiments, after determining the number of frequency domain units included in the frequency domain unit group based on the at least two frequency domain resources, the step further includes dividing at least one frequency domain unit group on each frequency domain resource of the at least two frequency domain resources based on the number of frequency domain units included in the frequency domain unit group. For example, it is assumed that the frequency domain unit group includes four frequency domain units based on two frequency domain resources 1 and 2. The frequency domain resource 1 includes 24 frequency domain units, the frequency domain resource 2 includes 35 frequency domain units, and the frequency domain units on each of the frequency domain resource 1 and the frequency domain resource 2 is numbered from 0. The frequency domain units are grouped for the frequency domain resource 1 and the frequency domain resource 2 respectively to obtain a frequency domain unit group on the frequency domain resource 1 and a frequency domain unit group on the frequency domain resource 2. Specifically, the frequency domain resource 1 may be divided into six frequency domain unit groups, and the number of frequency domain units included in each frequency domain unit group is four. On the frequency domain resource 2, nine frequency domain unit groups may be divided, the number of frequency domain units included in the last frequency domain unit group is 3, and the number of frequency domain units included in each of the other eight frequency domain unit groups is 4.

In the above method, division is performed separately on each frequency domain resource to obtain a respective frequency domain unit group, the utilization of frequency domain resources of different scales can be better balanced, and the overall utilization efficiency of frequency domain resources can be improved.

In some embodiments, for any one of the frequency domain resources, the frequency domain units included in the first frequency domain unit group and the frequency domain units included in the last frequency domain unit group are defined. For any one of the at least two frequency domain resources, the number of frequency domain units included in the first frequency domain unit group obtained by dividing the frequency domain resource is $P - N^{start} \bmod P$.

If $(N^{start} + N^{size}) \bmod P \neq 0$, the number of frequency domain units included in the last frequency domain unit group obtained by dividing the frequency domain resource is $(N^{start} + N^{size}) \bmod P$.

If $(N^{start} + N^{size}) \bmod P = 0$, the number of frequency domain units included in the last frequency domain unit group obtained by dividing the frequency domain resource is P.

The number of frequency domain units included in each of the other frequency domain unit groups obtained by dividing the frequency domain resource is P, and each of the other frequency domain unit groups refers to a frequency domain unit group other than the first frequency domain unit group and the last frequency domain unit group.

$P$ is the number of frequency domain units included in the frequency domain unit group determined based on the at least two frequency domain resources, that is, P is the number of frequency domain units included in the frequency domain unit group determined in operation 310, or the size of the frequency domain unit group. $N^{start}$ is the serial number of the first frequency domain unit of the frequency domain resource, and $N^{size}$ is the number of frequency domain units included in the frequency domain resource.

In some embodiments, $N^{start}$ is the serial number of the first frequency domain unit of the frequency domain resource on the first resource. When the frequency domain resource is an activated bandwidth on the carrier, the first resource is the carrier where the frequency domain resource is located. Alternatively, when the frequency domain resource is a set of frequency domain units having the same transmission direction on the carrier, the first resource is the carrier where the frequency domain resource is located. Alternatively, when the frequency domain resource is a set of frequency domain units having the same transmission direction in the activated bandwidth on the carrier, the first resource is the carrier where the frequency domain resource is located. Alternatively, when the frequency domain resource is a set of frequency domain units having the same transmission direction in the activated bandwidths on the carrier, the first resource is the activated bandwidth on the carrier where the frequency domain resource is located.

For example, when the frequency domain resource is a carrier, the frequency domain unit group is an RBG, and the frequency domain unit is an RB, then with reference to FIG. 4, which shows a schematic diagram of RBGs obtained by performing division according to an embodiment of the present disclosure.

A carrier aggregation system contains 2 carriers, carrier 1 has a bandwidth of 20M (including 100 RBs) and carrier 2 has a bandwidth of 10M (including 50 RBs). The RBG size P = 16 is determined based on the sum (150 RB) of the bandwidths of the two carriers, and based on the configuration parameters of Configuration 1 in Table 1 above. Where, for carrier 1, the first RBG size is: 16 - 0 = 16, the last RBG size is: 100 mod 16 = 4, and the other RBG sizes are: 16. For carrier 2, the first RBG size is: 16 - 0 = 16, the last RBG size is: 50 mod 16 = 2, and the other RBG sizes are: 16.

For example, when the frequency domain resource is an activated bandwidth on a carrier (hereinafter, an activated BWP is taken as an example), the frequency domain unit group is an RBG, and the frequency domain unit is an RB, then with reference to FIG. 5, which shows a schematic diagram of the RBGs obtained by performing division according to another embodiment of the present disclosure.

A carrier aggregation system includes two carriers, carrier 1 has a bandwidth of 20M, and the activated BWP on carrier 1 is RB0-RB29 of carrier 1. The bandwidth of carrier 2 is 10M, and the activated BWP on carrier 2 is RB10-RB39 of carrier 2, as illustrated in FIG. 5. The RBG size P = 4 is determined based on the sum (60 RBs) of the activated bandwidths in the two carriers, and based on the configuration parameters of configuration 1 in Table 1 above. For carrier 1, the first RBG size is: 4 - 0 = 4, the last RBG size is: 30 mod 4 = 2, and the other RBG sizes are: 4. For carrier 2, the first RBG size is: 4 - 10 mod 4 = 2, and since (10 + 30) mod 4 = 0, the last RBG size is: 4, and the other RBG sizes are: 4.

In some embodiments, for any one of the at least two frequency domain resources, in a case where the frequency domain resource is shared by multiple devices, multiple frequency domain unit groups are obtained for each of the multiple devices by dividing the frequency domain resource based on the same frequency domain unit numbering rule. Here, the multiple devices may refer to multiple terminal devices or multiple access network devices.

For each of the multiple devices sharing the same frequency domain resource, a frequency domain unit group is obtained by performing division based on the actual situation of each device and based on the same frequency domain unit numbering rule. The number of frequency domain units included in the frequency domain unit group obtained by performing division for each device may be the same or different, and the present disclosure is not limited thereto. The same frequency domain unit numbering rule refers to the frequency domain unit obtained by dividing the frequency domain resource, and the number corresponding to the same frequency domain unit is the same for the multiple devices. For example, the device 1 and the device 2 share the same frequency domain resource, and the frequency domain resource includes 100 frequency domain units, which are numbered in ascending order of the frequency. The numbers of the 100 frequency domain units are 0 to 99 in sequence. For the device 1, the numbers of the 100 frequency domain units are 0 to 99 in sequence, and for the device 2, the numbers of the 100 frequency domain units are also 0 to 99 in sequence. The numbers corresponding to the same frequency domain unit among the 100 frequency domain units are the same for the device 1 and the device 2.

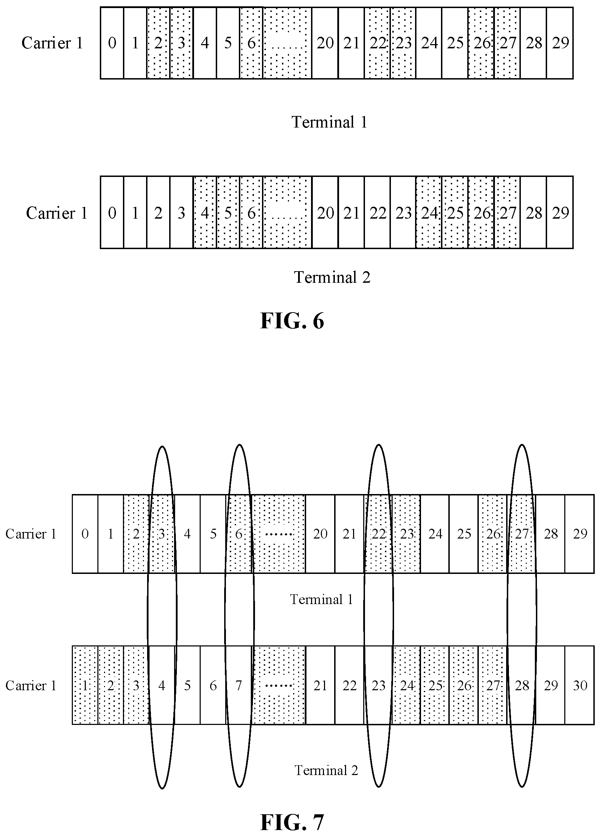

As an example, reference is made to FIG. 6, which illustrates a schematic diagram of RBGs obtained by performing division in a case where multiple devices share the same carrier according to an embodiment of the present disclosure. The terminal 1 is configured with only carrier 1, the bandwidth is 30 RBs, and the RBG configuration parameter is configured based on the Configuration 1 in the above Table 1, and thus the RBG size is 2. The terminal 2 is configured with carrier 0 and carrier 1 (carrier 0 is not illustrated in FIG. 6), the bandwidth sum is 59 RBs, and the RBG configuration parameter is configured based on the Configuration 1 in Table 1 above, and thus the RBG size is 4. On carrier 1, terminal 1 and terminal 2 obtain the RBGs by performing division based on the same RB numbering rule, that is, the 30 RBs are numbered from 0 to 29, as illustrated in FIG. 6. The first RBG obtained by performing division for the terminal 1 on the carrier 1 includes RBs numbered 0 and 1, the second RBG includes RBs numbered 2 and 3, the third RBG includes RBs numbered 4 and 5, and so on, and the last RBG includes RBs numbered 28 and 29. The first RBG obtained by performing division for the terminal 2 on the carrier 1 includes RBs numbered 0 to 3, the second RBG includes RBs numbered 4 to 7, the third RBG includes RBs numbered 8 to 11, and so on, and the last RBG includes RBs numbered 28 and 29. As can be seen from FIG. 6, although the RBG sizes of the two terminals are different, since both the two terminals obtain the RBGs based on the same RB numbering rule on the same carrier, therefore, the RBGs obtained by performing division has a good nested structure, that is, the RBs occupied by the RBGs of two different terminals completely overlap, for example, the first RBG for terminal 2 and the first RBG and the second RBG for terminal 1 completely overlap, thus avoiding resource fragmentation. For example, an RBG composed of two RBs numbered 0 and 1 on the carrier 1 may be scheduled for use by the terminal 1, an RBG composed of two RBs numbered 2 and 3 may also be scheduled for use by the terminal 1, and an RBG composed of four RBs numbered 4 to 7 may be scheduled for use by the terminal 2, and there is no fragmented RBs that cannot be scheduled for use.

On the contrary, for each of multiple devices sharing the same frequency domain resource, if a frequency domain unit group is obtained by performing division without following the same frequency domain unit numbering rule, a problem of resource fragmentation may occur. As illustrated in FIG. 7, if the RBG division is performed based on the RB numbering rule in FIG. 7, the nested structure cannot be maintained, which may cause RBs misalignment and may result in fragmented RBs that cannot be scheduled for use. The terminal 1 is configured with only carrier 1, the bandwidth is 30 RBs, and the RBG configuration parameter is configured based on the Configuration 1 in the above Table 1, and thus the RBG size is 2. The terminal 2 is configured with carrier 0 and carrier 1 (carrier 0 is not illustrated in FIG. 7), the bandwidth sum is 59 RBs, and the RBG configuration parameter is configured 1 according to Table 1 above, and the RBG size is 4. On carrier 1, terminal 1 and terminal 2 obtain the RBGs by performing division based on different RB numbering rules. It is assumed that terminal 1 numbers these 30 RBs in a manner starting from 0 to 29, and terminal 2 numbers these 30 RBs in a manner starting from 1 to 30, as illustrated in FIG. 7. The first RBG obtained by performing division for the terminal 1 on the carrier 1 includes RBs numbered 0 and 1, the second RBG includes RBs numbered 2 and 3, the third RBG includes RBs numbered 4 and 5, and so on, and the last RBG includes RBs numbered 28 and 29. The first RBG divided by the terminal 2 on the carrier 1 includes RBs numbered 1 to 3, the second RBG includes RBs numbered 4 to 7, the third RBG includes RBs numbered 8 to 11, and so on, and the last RBG includes RBs numbered 28 to 30. As can be seen from FIG. 7, if the terminal 2 is scheduled with an RBG composed of the fourth to seventh RBs (corresponding to the RBs numbered 4 to 7 in a a lower drawing of FIG. 7) among the 30 RBs, then the fourth RB (corresponding to the RB numbered 3 in an upper drawing of FIG. 7) cannot be scheduled for the terminal 1 since the fourth RB overlaps with the RBG scheduled for terminal 2. For the terminal 1, the third RB (corresponding to the RB numbered 2 in an upper drawing of FIG. 7) cannot be scheduled because the third to fourth RBs (corresponding to the RBs numbered 2-3 in an upper drawing of FIG. 7) is one RBG. This leads to the problem of resource fragmentation and affects resource utilization.

In the above-described method, in the case where multiple devices share the same carrier, different devices obtain respective frequency domain unit groups by performing division based on the same frequency domain unit numbering rule, thereby avoiding the problems of resource fragmentation and inefficient utilization.

In some embodiments, at least two frequency domain resources belong to the same resource pool, and frequency domain unit groups on any frequency domain resource or any frequency domain resource combination in the resource pool is scheduled by the same signaling.

The existing CA working mode may have some redundant transmission of information. For a terminal device configured with CA, it is apparently redundant to read multiple sets of system information. If multiple member carriers can be managed uniformly, such as sharing system information, the total overhead in the system can be significantly reduced, and sharing frequency domain resources can improve scheduling efficiency and reduce the overhead of downlink control channel. Multiple carriers work together as one serving cell. Frequency domain resources on multiple carriers are scheduled by a dominant control channel as a large resource pool. That is, the idea of resource pooling can be adopted to centrally place multiple frequency domain resources with common characteristics in the same resource pool. For example, multiple frequency domain resources configured by a certain terminal device may be placed in the same resource pool for unified management and scheduling. The resource pool may include independent frequency domain resources or a combination of multiple frequency domain resources. Regardless of whether the resource pool is a single frequency domain resource or a combination of frequency domain resources, the frequency domain unit group can be divided thereon. The scheduling instruction of the frequency domain unit group of any granularity in the resource pool may be indicated by a unified scheduling signaling sent by the access network device.

For example, the resource pool includes three frequency domain resources having different sizes: frequency domain resource 1, frequency domain resource 2, and frequency domain resource 3, and the terminal 1 is configured with frequency domain resource 1 and frequency domain resource 2. For the terminal 1, the frequency domain resource 1 includes a frequency domain unit group 1A, a frequency domain unit group 1B, and a frequency domain unit group 1C, and the frequency domain resource 2 includes a frequency domain unit group 2A and a frequency domain unit group 2B.

When it is necessary to schedule resources on the frequency domain resource combination of the frequency domain resource 1 and the frequency domain resource 2 for the terminal 1, the access network device may send a signaling for scheduling the frequency domain unit group on the frequency domain resource 1 and the frequency domain unit group on the frequency domain resource 2. For example, the signaling is used to schedule the frequency domain element group 1A on the frequency domain resource 1 for use by the terminal 1, and to schedule the frequency domain element group 2A on the frequency domain resource 2 for use by the terminal 1. In this way, there is no need to send two signals to schedule the frequency domain unit group on the frequency domain resource 1 and the frequency domain unit group on the frequency domain resource 2 for the terminal 1, respectively.

The aforementioned method realizes centralized control of frequency domain resources in the resource pool, simplifies signaling interaction and reduces signaling overhead. At the same time, it also makes the frequency domain resources in the resource pool easier to plan, manage and schedule centrally, and improves the utilization efficiency of frequency domain resources.

In some embodiments, when the resource pool is not configured, for each of the at least two frequency domain resources, the number of frequency domain units included in the frequency domain unit group obtained by dividing the frequency domain resource is determined based on the number of frequency domain units included in the frequency domain resource.

In some embodiments, when a resource pool is configured and the resource pool includes the aforementioned at least two frequency domain resources, the number of frequency domain units included in the frequency domain unit group is determined based on the at least two frequency domain resources according to the above-described method. Then, based on the number of frequency domain units included in the frequency domain unit group, at least one frequency domain unit group is obtained by dividing each frequency domain resource of the at least two frequency domain resources respectively. When the resource pool is not configured, for each of the at least two frequency domain resources, the number of frequency domain units included in the frequency domain unit group obtained by dividing the frequency domain resource is determined based on the number of frequency domain units included in the frequency domain resource, and then at least one frequency domain unit group is obtained by dividing the frequency domain resource based on the number of frequency domain units included in the frequency domain unit group obtained by dividing the frequency domain resource.

That is, in a case where a resource pool is configured, by adopting the method provided in the present disclosure, multiple frequency domain resources in the resource pool may be combined to determine the size of the frequency domain unit group. In a case where the resource pool is not configured, the size of the frequency domain unit group may be individually determined based on each frequency domain resource in a conventional manner.

In some embodiments, the technical solution provided by the embodiment of the present disclosure is applicable to both uplink and downlink transmission directions. At the same time, the technical solution supports aggregation combination of Time Division Duplex (TDD) carriers, aggregation combination of Frequency Division Duplex (FDD) carriers, and mixed aggregation combination of TDD and FDD carriers. Operators can choose TDD co-standard aggregation, FDD co-standard aggregation or TDD/FDD hybrid aggregation based on the actual needs of network deployment, so that this technical solution can be used in different application scenarios. This solution has wide applicability.

In some embodiments, the method of determining the size of the frequency domain unit group provided in the present disclosure is applicable to both the terminal device and the access network device. That is, the terminal device and the access network device, both of which follow the same method, determine the size of the frequency domain unit group. After determining the size of the frequency domain unit group, the terminal device and the access network device may respectively obtain at least one frequency domain unit group by dividing each frequency domain resource based on the size of the frequency domain unit group.

In some embodiments, when the frequency domain unit group is an RBG, the access network device performs, based on the RBG obtained by dividing the frequency domain resource, resource scheduling with the RBG as granularity, and the access network device may send scheduling information to the terminal device for indicating the RBG allocated to the terminal device. Accordingly, after receiving the scheduling information transmitted by the access network device, the terminal device determines the RBG allocated to itself based on the scheduling information.

In some embodiments, when the frequency domain unit group is a sub-band, the terminal device performs, based on the sub-band obtained by dividing the frequency domain resource, CSI measurement and reporting with the sub-band as granularity, and the terminal device may send CSI to the access network device for indicating channel states of one or more sub-bands. Accordingly, after receiving the CSI transmitted by the terminal device, the access network device determines the channel state of the corresponding sub-band based on the CSI.

According to the technical solution provided by the embodiment of the present disclosure, by determining the number of frequency domain units included in the frequency domain unit group based on at least two frequency domain resources, the size of the frequency domain unit group is jointly determined based on multiple frequency domain resources, and it is not necessary to independently determine the size of the frequency domain unit group for each frequency domain resource, thereby reducing the complexity of resource determination.

In addition, when the frequency domain unit group is an RBG, jointly determining the size of the RBG based on multiple frequency domain resources by adopting the scheme of the present disclosure, not only can the complexity of determining the RBG size be reduced, but also the amount of scheduling information of the frequency domain resources can be reduced, and signaling overhead can be saved.

In addition, when the frequency domain unit group is a sub-band, jointly determining the sub-band size based on multiple frequency domain resources by adopting the scheme of the present disclosure can not only reduce the complexity of determining the sub-band size, but also reduce the complexity of CSI measurement, reporting, and parsing.

The following are embodiments of the apparatus of the present disclosure, and can be used to execute the embodiments of the method of the present disclosure. For details not disclosed in the embodiments of the apparatus of the present disclosure, with reference to the embodiments of the method of the present disclosure.

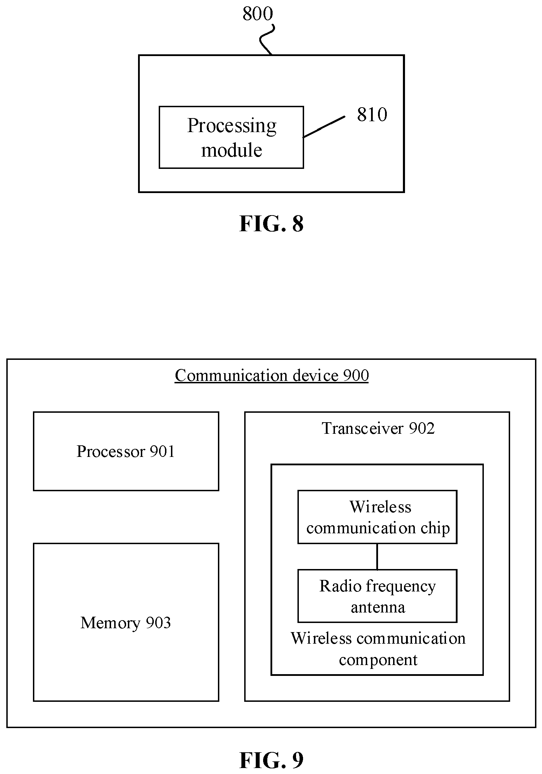

With reference to FIG. 8, it illustrates a block diagram of a resource determination apparatus according to an embodiment of the present disclosure. The apparatus has a function of implementing the resource determination method described above, and the function may be implemented by hardware or by hardware executing corresponding software. The apparatus may be a communication device described above or may be provided in a communication device, which may be a terminal device or an access network device. As illustrated in FIG. 8, the apparatus 800 may include a processing module 810.

The processing module 810 is configured to determine a number of frequency domain units included in a frequency domain unit group based on at least two frequency domain resources, each of the frequency domain resources includes at least one of the frequency domain units.

In some embodiments, the frequency domain resource is one of: a carrier; an activated bandwidth on a carrier; a set of frequency domain units with a same transmission direction on a carrier; or a set of frequency domain units with a same transmission direction in an activated bandwidth on a carrier.

In some embodiments, the processing module 810 is configured to determine the number of frequency domain units included in the frequency domain unit group based on a sum of the numbers of frequency domain units included in the at least two frequency domain resources.

In some embodiments, the processing module 810 is configured to determine the number of frequency domain units included in the frequency domain unit group based on a configuration parameter and the sum of the numbers of frequency domain units included in the at least two frequency domain resources.

In some embodiments, the at least two frequency domain resources belong to a same resource pool, and the configuration parameter is configured for the resource pool; or, the configuration parameter is shared by the at least two frequency domain resources; or, the at least two frequency domain resources correspond to the same configuration parameter.

In some embodiments, the processing module 810 is further configured to obtain at least one frequency domain unit group by dividing each of the at least two frequency domain resources respectively based on the number of frequency domain units included in the frequency domain unit group.

In some embodiments, for any one of the at least two frequency domain resources, a number of the frequency domain units included in a first frequency domain unit group obtained by dividing the frequency domain resource is $P - N^{start} \bmod P$.

If $(N^{start} + N^{size}) \bmod P \neq 0$, a number of frequency domain units included in the last frequency domain unit group obtained by dividing the frequency domain resource is $(N^{start} + N^{size}) \bmod P$.

If $(N^{start} + N^{size}) \bmod P = 0$, a number of frequency domain units included in a last frequency domain unit group obtained by dividing the frequency domain resource is $P$.

A number of the frequency domain units included in each of other frequency domain unit groups obtained by dividing the frequency domain resource is P, and each of the other frequency domain unit groups refers to a frequency domain unit group other than the first frequency domain unit group and the last frequency domain unit group.

$P$ is the number of frequency domain units included in the frequency domain unit group determined based on the at least two frequency domain resources, $N^{start}$ is a serial number of a first frequency domain unit of the frequency domain resource, and $N^{size}$ is a number of frequency domain units included in the frequency domain resource.

In some embodiments, $N^{start}$ is a serial number of a first frequency domain unit of the frequency domain resource on the first resource.

The frequency domain resource is an activated bandwidth on a carrier, and the first resource is a carrier where the frequency domain resource is located.

Alternatively, the frequency domain resource is a set of frequency domain units having the same transmission direction on a carrier, and the first resource is the carrier where the frequency domain resource is located.

Alternatively, the frequency domain resource is a set of frequency domain units having the same transmission direction in an activated bandwidth on a carrier, and the first resource is a carrier where the frequency domain resource is located.

Alternatively, the frequency domain resource is a set of frequency domain units having the same transmission direction in an activated bandwidth on a carrier, and the first resource is the activated bandwidth on the carrier where the frequency domain resource is located.

In some embodiments, for any one of the at least two frequency domain resources, in a case where the frequency domain resource is shared by multiple devices, multiple frequency domain unit groups are obtained respectively for each of the plurality of devices by dividing the frequency domain resource based on a same frequency domain unit numbering rule.

In some embodiments, the at least two frequency domain resources belong to the same resource pool, and frequency domain unit groups on any frequency domain resource or any frequency domain resource combination in the resource pool is scheduled by the same signaling.

In some embodiments, the at least two frequency domain resources belong to the same resource pool, and the processing module 810 is further configured to: determine, for each of the at least two frequency domain resources, a number of frequency domain units included in a frequency domain unit group obtained by dividing the frequency domain resource based on the number of frequency domain units included in the frequency domain resource, in a case that the resource pool is not configured.

In some embodiments, the at least two frequency domain resources are non-contiguous. Alternatively, the at least two frequency domain resources are contiguous.

In some embodiments, the frequency domain unit group is an RBG. Alternatively, the frequency domain unit group is a sub-band.

According to the technical solution provided by the embodiment of the present disclosure, by determining the number of frequency domain units included in the frequency domain unit group based on at least two frequency domain resources, the size of the frequency domain unit group is jointly determined based on multiple frequency domain resources, and it is not necessary to independently determine the size of the frequency domain unit group for each frequency domain resource, thereby reducing the complexity of resource determination.

With reference to FIG. 9, it illustrates a schematic structural diagram of a communication device provided by an embodiment of the present disclosure. The communication device may be the terminal device described above or the access network device described above. The communication device 900 may include a processor 901, a transceiver 902, and a memory 903. The processor 901 is configured to perform the functions of the processing module 810 described above.

The processor 901 includes one or more processing cores, and executes various functional applications and information processing by running software programs and modules.

The transceiver 902 may include a receiver and a transmitter, For example, the receiver and the transmitter may be implemented as the same wireless communication component, and the wireless communication component may include a wireless communication chip and a radio frequency antenna.

The memory 903 may be connected to the processor 901 and the transceiver 902.

The memory 903 may be used to store a computer program executed by a processor, and the processor 901 may be used to execute the computer program to perform various operations in the above-described method embodiments.

In some embodiments, the processor 901 is configured to determine the number of frequency domain units included in the frequency domain unit group based on the at least two frequency domain resources, each of the frequency domain resources includes at least one of the frequency domain units.

For details not described in detail in this embodiment, reference may be made to the above-described embodiments, and will not be repeated here.

Furthermore, the memory may be implemented by any type of volatile or non-volatile storage device, including, but not limited to, magnetic or optical disk, electrically erasable programmable read-only memory, erasable programmable read-only memory, static ready-to-access memory, read-only memory, magnetic memory, flash memory, programmable read-only memory, or a combination thereof.

An embodiment of the present disclosure further provides a computer-readable storage medium, a computer program is stored in the storage medium, and the computer program is executed by a processor to perform the resource determination method. In some embodiments, the computer-readable storage medium may include a Read-Only Memory (ROM), a Random-Access Memory (RAM), a Solid State Drive (SSD), an optical disc, or the like. The random access memory may include a Resistance Random Access Memory (ReRAM) and a Dynamic Random Access Memory (DRAM).

An embodiment of the present disclosure also provides a chip. The chip includes a programmable logic circuit and/or program instructions, and is used to perform the resource determination method when the chip is running.

Embodiments of the present disclosure also provide a computer program product. The computer program product includes a computer program stored in a computer-readable storage medium, and a processor reads and executes the computer program from the computer-readable storage medium to perform the resource determination method.

It should be understood that the "indication" mentioned in the embodiments of the present disclosure may be a direct indication, an indirect indication, or indicates an associated relationship. For example, A indicates B, which may mean that A directly indicates B, for example, B can be acquired by A. It can also be indicated that A indicates B indirectly, for example, A indicates C, and B can be obtained through C. It may also indicate that there is an association relationship between A and B.

In the description of the embodiments of the present disclosure, the term "correspondence" may indicate that there is a direct correspondence or indirect correspondence relationship between the two, may indicate that there is a correlation relationship between the two, or may indicate a relationship between indicating and being instructed, configuring and being configured, or the like.

In some embodiments of the present disclosure, "predefined" may be realized by storing corresponding codes, tables in advance in devices (e.g., including terminal devices and network devices), or other methods that can be used to indicate relevant information, and the present disclosure does not limit the specific implementation methods thereof. For example, predefined may refer to defined in the protocol.

In some embodiments of the present disclosure, the "protocol" may refer to a standard protocol in the field of communication, and may include, for example, a BLE protocol, a Wi-Fi protocol, and related protocols applied to future communication systems, and the present disclosure is not limited thereto.

Reference herein to "a plurality of/multiple" refers to two or more. "And/or" describes the association relationship of the association object, and means that there may be three relationships, for example, A and/or B may mean that: A exists alone, A and B exist at the same time, or B exists alone. The character "/" generally indicates that the associated objects before and after are an "or" relationship.

Reference herein to "A greater than or equal to B" may mean that A greater than or equal to B, or A greater than B, and "less than or equal to" may mean that A less than or equal to B, or A less than B.

In addition, the operation numbering described herein only illustrates a possible sequence of execution between operations by way of example. In some other embodiments, the above-mentioned operations may also be executed out of the sequence of numbering, for example, two operations with different numbers are executed simultaneously, or two steps with different numbers are executed in the reverse order as illustrated in the drawings, and the embodiments of the present disclosure are not limited to this.

Those skilled in the art should recognize that in one or more of the examples described above, the functions described in the embodiments of the present disclosure may be implemented in hardware, software, firmware, or any combination thereof. When implemented using software, these functions may be stored in a computer readable medium or transmitted as one or more instructions or code on a computer readable medium. Computer-readable media include computer storage media and communication media, the communication media includes any medium that facilitates transfer of a computer program from one place to another. The storage medium may be any available medium accessible by a general-purpose or special-purpose computer.

The above description is only an exemplary embodiment of the present disclosure, and is not intended to limit the present disclosure. Any modification, equivalent substitution, improvement, etc. made within the spirit and principles of the present disclosure should be included within the scope of protection of the present disclosure.

**Claims**

1. A resource determination method, comprising:

    determining a number of frequency domain units included in a frequency domain unit group based on at least two frequency domain resources,
    wherein each of the at least two frequency domain resources comprises at least one of the frequency domain units.

2. The method of claim 1, wherein the frequency domain resource is one of:

    a carrier;
    an activated bandwidth on a carrier;
    a set of frequency domain units with a same transmission direction on a carrier; or,
    a set of frequency domain units with a same transmission direction in an activated bandwidth on a carrier.

3. The method of claim 1 or 2, wherein determining the number of frequency domain units included in the frequency domain unit group based on the at least two frequency domain resources comprises:
    determining the number of frequency domain units included in the frequency domain unit group based on a sum of numbers of frequency domain units included in the at least two frequency domain resources.

4. The method of claim 3, wherein determining the number of frequency domain units included in the frequency domain unit group based on the sum of the numbers of frequency domain units included in the at least two frequency domain resources comprises:
    determining the number of frequency domain units included in the frequency domain unit group based on a configuration parameter and the sum of the numbers of frequency domain units included in the at least two frequency domain resources.

5. The method of claim 4, wherein

    the at least two frequency domain resources belong to a same resource pool, and the configuration parameter is configured for the resource pool; or,
    the configuration parameter is shared by the at least two frequency domain resources; or,
    the at least two frequency domain resources correspond to the same configuration parameter.

6. The method of any one of claims 1 to 5, further comprising: after determining the number of frequency domain units included in the frequency domain unit group based on the at least two frequency domain resources,
    obtaining at least one frequency domain unit group by dividing each of the at least two frequency domain resources respectively based on the number of frequency domain units included in the frequency domain unit group.

7. The method of claim 6, wherein for any one of the at least two frequency domain resources,

    a number of frequency domain units included in a first frequency domain unit group obtained by dividing the frequency domain resource is $P - N^{start} \bmod P$;
    if $(N^{start} + N^{size}) \bmod P \neq 0$, a number of frequency domain units included in a last frequency domain unit group obtained by dividing the frequency domain resource is $(N^{start} + N^{size})mod\ P$;
if $(N^{start} + N^{size})\ mod\ P = 0$, a number of frequency domain units included in a last frequency domain unit group obtained by dividing the frequency domain resource is P;
a number of the frequency domain units included in each of other frequency domain unit groups obtained by dividing the frequency domain resource is P, wherein each of the other frequency domain unit groups refers to a frequency domain unit group other than the first frequency domain unit group and the last frequency domain unit group,
wherein P is the number of frequency domain units included in the frequency domain unit group determined based on the at least two frequency domain resources, $N^{start}$ is a serial number of a first frequency domain unit of the frequency domain resource, and $N^{size}$ is a number of frequency domain units included in the frequency domain resource.

8. The method of claim 7, wherein $N^{start}$ is a serial number of a first frequency domain unit of the frequency domain resource on a first resource;

the frequency domain resource is an activated bandwidth on a carrier, and the first resource is a carrier where the frequency domain resource is located; or,
the frequency domain resource is a set of frequency domain units having a same transmission direction on a carrier, and the first resource is the carrier where the frequency domain resource is located; or,
the frequency domain resource is a set of frequency domain units having a same transmission direction in an activated bandwidth on a carrier, and the first resource is the carrier on which the frequency domain resource is located; or,
the frequency domain resource is a set of frequency domain units having a same transmission direction in an activated bandwidths on a carrier, and the first resource is the activated bandwidth on the carrier where the frequency domain resource is located.

9. The method of any one of claims 1 to 8, wherein for any one of the at least two frequency domain resources, in a case where the frequency domain resource is shared by a plurality of devices, a plurality of frequency domain unit group are obtained respectively for each of the plurality of devices by dividing the frequency domain resource based on a same frequency domain unit numbering rule.

10. The method of any one of claims 1 to 9, wherein the at least two frequency domain resources belong to a same resource pool, and frequency domain unit groups on any frequency domain resource or any frequency domain resource combination in the resource pool is scheduled by a same signaling.

11. The method of any one of claims 1 to 10, wherein the at least two frequency domain resources belong to a same resource pool, and the method further comprises:
in a case that the resource pool is not configured, determining, for each of the at least two frequency domain resources, a number of frequency domain units included in a frequency domain unit group obtained by dividing the frequency domain resource, based on the number of frequency domain units included in the frequency domain resource.

12. The method of any one of claims 1 to 11, wherein the at least two frequency domain resources are non-contiguous, or the at least two frequency domain resources are contiguous.

13. The method of any one of claims 1 to 12, wherein the frequency domain unit group is a resource block group (RBG), or the frequency domain unit group is a sub-band.

14. A resource determination apparatus, comprising:

a processing module, configured to determine a number of frequency domain units included in a frequency domain unit group based on at least two frequency domain resources,
wherein each of the frequency domain resources comprises at least one of the frequency domain units.

15. The apparatus of claim 14, wherein the frequency domain resources is one of:

a carrier;
an activated bandwidth on a carrier;
a set of frequency domain units with a same transmission direction on a carrier; or,

a set of frequency domain units with a same transmission direction in an activated bandwidth on a carrier.

16. The apparatus of claim 14 or 15, wherein the processing module is configured to determine the number of frequency domain units included in the frequency domain unit group based on a sum of numbers of frequency domain units included in the at least two frequency domain resources.

17. The apparatus of claim 16, wherein the processing module is configured to determine the number of frequency domain units included in the frequency domain unit group based on a configuration parameter and the sum of the numbers of frequency domain units included in the at least two frequency domain resources.

18. The apparatus of claim 17, wherein

the at least two frequency domain resources belong to a same resource pool, and the configuration parameter is configured for the resource pool; or,
the configuration parameter is shared by the at least two frequency domain resources; or,
the at least two frequency domain resources correspond to the same configuration parameter.

19. The apparatus of any one of claims 14 to 18, wherein the processing module is further configured to obtain at least one frequency domain unit group by dividing each of the at least two frequency domain resources respectively based on the number of frequency domain units included in the frequency domain unit group.

20. The apparatus of claim 19, wherein for any one of the at least two frequency domain resources,

a number of the frequency domain units included in a first frequency domain unit group obtained by dividing the frequency domain resource is $P - N^{start} \bmod P$;
if $(N^{start} + N^{size}) \bmod P \neq 0$, a number of frequency domain units included in a last frequency domain unit group obtained by dividing the frequency domain resource is $(N^{start} + N^{size}) \bmod P \bmod P$;
if $(N^{start} + N^{size}) \bmod P = 0$, a number of frequency domain units included in a last frequency domain unit group obtained by dividing the frequency domain resource is P;
a number of the frequency domain units included in each of other frequency domain unit groups obtained by dividing the frequency domain resource is P, wherein each of the other frequency domain unit groups refers to a frequency domain unit group other than the first frequency domain unit group and the last frequency domain unit group,
wherein P is the number of frequency domain units included in the frequency domain unit group determined based on the at least two frequency domain resources, $N^{start}$ is a serial number of a first frequency domain unit of the frequency domain resource, and $N^{size}$ is a number of frequency domain units included in the frequency domain resource.

21. The apparatus of claim 20, wherein $N^{start}$ is a serial number of a first frequency domain unit of the frequency domain resource on a the first resource;

the frequency domain resource is an activated bandwidth on a carrier, and the first resource is a carrier where the frequency domain resource is located; or,
the frequency domain resource is a set of frequency domain units having a same transmission direction on a carrier, and the first resource is the carrier where the frequency domain resource is located; or,
the frequency domain resource is a set of frequency domain units having a same transmission direction in an activated bandwidth on a carrier, and the first resource is a carrier where the frequency domain resource is located; or,
the frequency domain resource is a set of frequency domain units having a same transmission direction in an activated bandwidths on a carrier, and the first resource is the activated bandwidth on the carrier where the frequency domain resource is located.

22. The apparatus of any one of claims 14 to 21, wherein, for any one of the at least two frequency domain resources, in a case where the frequency domain resource is shared by a plurality of devices, a plurality of frequency domain unit groups are obtained respectively for each of the plurality of devices by dividing the frequency domain resource based on a same frequency domain unit numbering rule.

23. The apparatus of any one of claims 14 to 22, wherein the at least two frequency domain resources belong to a same resource pool, and frequency domain unit groups on any frequency domain resource or any frequency domain resource combination in the resource pool is scheduled by a same signaling.

24. The apparatus of any one of claims 14 to 23, wherein the at least two frequency domain resources belong to a same resource pool, and the processing module is further configured to determine, for each of the at least two frequency domain resources, a number of frequency domain units included in a frequency domain unit group obtained by dividing the frequency domain resource based on the number of frequency domain units included in the frequency domain resource, in a case that the resource pool is not configured.

25. The apparatus of any one of claims 14 to 24, wherein the at least two frequency domain resources are non-contiguous, or the at least two frequency domain resources are contiguous.

26. The apparatus of any one of claims 14 to 25, wherein the frequency domain unit group is a resource block group (RBG), or the frequency domain unit group is a sub-band.

27. A communication device comprising a processor and a memory having a computer program stored therein, the processor executing the computer program to perform the method of any one of claims 1 to 13.

28. A computer-readable storage medium having stored therein a computer program, that when executed by a processor, causes the processor to perform the method of any one of claims 1 to 13.

29. A chip comprising a programmable logic circuitry and/or program instructions, wherein the chip performs the method of any one of claims 1 to 13 when is running.

30. A computer program product comprising a computer program stored in a computer readable storage medium, from which a processor reads and executes the computer program to perform the method of any one of claims 1 to 13.

EP 4 780 099 A1

**FIG. 1**

**FIG. 2**

The number of frequency domain units included in the frequency domain unit group is determined based on at least two frequency domain resources, each frequency domain resource includes at least one frequency domain unit

310

**FIG. 3**

Carrier 1 | 0 | 1 | 2 | 3 | 4 | 5 | 6 | 7 | 8 | 9 | 10 | 11 | 12 | 13 | 14 | 15 | 16 | 17 | 18 | 19 | ······ | 90 | 91 | 92 | 93 | 94 | 95 | 96 | 97 | 98 | 99

Carrier 2 | 0 | 1 | 2 | 3 | 4 | 5 | 6 | 7 | 8 | 9 | 10 | 11 | 12 | 13 | 14 | 15 | 16 | 17 | 18 | 19 | ······ | 45 | 46 | 47 | 48 | 49

**FIG. 4**

Carrier 1 | 0 | 1 | 2 | 3 | 4 | 5 | 6 | ...... | 20 | 21 | 22 | 23 | 24 | 25 | 26 | 27 | 28 | 29 | ......

Carrier 2 | ...... | 10 | 11 | 12 | 13 | 14 | 15 | 16 | ...... | 35 | 36 | 37 | 38 | 39 | ......

**FIG. 5**

FIG. 6

FIG. 7

800

Processing module — 810

**FIG. 8**

Communication device 900

Processor 901

Memory 903

Transceiver 902

Wireless communication chip

Radio frequency antenna

Wireless communication component

**FIG. 9**

## INTERNATIONAL SEARCH REPORT

International application No.

**PCT/CN2023/119259**

### A. CLASSIFICATION OF SUBJECT MATTER

H04W 72/04(2023.01)i; H04W72/0453(2023.01)i; H04W72/12(2023.01)i

According to International Patent Classification (IPC) or to both national classification and IPC

### B. FIELDS SEARCHED

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNTXT, ENTXTC, DWPI, 3GPP, CNKI, IEEE: 新空口, 资源, 分配, 频域, 频带, 载波, 带宽, 带宽部分, 激活, 资源块, 子带, 子载波, 编号, 配置, 个数, 数目, 数量, 大小, NR, new radio, resource, allocation, frequency, carrier, bandwidth, BWP, active, resource block, RBG, RB, sub-band, sub-carrier, configuration, number, size.

### C. DOCUMENTS CONSIDERED TO BE RELEVANT

| Category* | Citation of document, with indication, where appropriate, of the relevant passages | Relevant to claim No. |
|---|---|---|
| X | CN 112399590 A (HUAWEI TECHNOLOGIES CO., LTD.) 23 February 2021 (2021-02-23) description, paragraphs 187-294 | 1-30 |
| X | CN 115866765 A (ZTE CORP.) 28 March 2023 (2023-03-28) description, paragraphs 204-287 | 1-30 |
| A | CN 109152047 A (ZTE CORP.) 04 January 2019 (2019-01-04) entire document | 1-30 |
| A | CN 110832935 A (FUJITSU LTD.) 21 February 2020 (2020-02-21) entire document | 1-30 |
| A | US 2020170016 A1 (FUJITSU LTD.) 28 May 2020 (2020-05-28) entire document | 1-30 |

☐ Further documents are listed in the continuation of Box C.  ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **24 November 2023** | **27 November 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**EP 4 780 099 A1**

| INTERNATIONAL SEARCH REPORT | International application No. |
| Information on patent family members | PCT/CN2023/119259 |

| Patent document cited in search report | | | Publication date (day/month/year) | Patent family member(s) | | | Publication date (day/month/year) |
|---|---|---|---|---|---|---|---|
| CN | 112399590 | A | 23 February 2021 | None | | | |
| CN | 115866765 | A | 28 March 2023 | None | | | |
| CN | 109152047 | A | 04 January 2019 | WO | 2018233597 | A1 | 27 December 2018 |
| CN | 110832935 | A | 21 February 2020 | JP | 2020530227 | A | 15 October 2020 |
| | | | | US | 2020170016 | A1 | 28 May 2020 |
| | | | | US | 11729784 | B2 | 15 August 2023 |
| | | | | WO | 2019028767 | A1 | 14 February 2019 |
| US | 2020170016 | A1 | 28 May 2020 | None | | | |

Form PCT/ISA/210 (patent family annex) (July 2022)